(19) Europäisches Patentamt
European Patent Office
Office européen des brevets

(11) EP 4 620 995 A1

(12) **EUROPEAN PATENT APPLICATION**
published in accordance with Art. 153(4) EPC

(43) Date of publication:
**24.09.2025 Bulletin 2025/39**

(21) Application number: **23907267.1**

(22) Date of filing: **26.07.2023**

(51) International Patent Classification (IPC):
***C08J 3/12*** *(2006.01)* ***C08J 3/24*** *(2006.01)*
***C08F 6/02*** *(2006.01)*

(52) Cooperative Patent Classification (CPC):
**C08F 6/02; C08J 3/12; C08J 3/24**

(86) International application number:
**PCT/KR2023/010826**

(87) International publication number:
**WO 2024/135976 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.12.2022 KR 20220181773**

(71) Applicant: **LG CHEM, LTD.**
**Seoul 07336 (KR)**

(72) Inventors:
- **BAEK, Seokhyeon**
  **Daejeon 34122 (KR)**
- **PARK, Sung Soo**
  **Daejeon 34122 (KR)**
- **RYU, Jihye**
  **Daejeon 34122 (KR)**
- **SUH, Juhyung**
  **Daejeon 34122 (KR)**
- **KANG, Hosung**
  **Daejeon 34122 (KR)**

(74) Representative: **Plasseraud IP**
**104 Rue de Richelieu**
**CS92104**
**75080 Paris Cedex 02 (FR)**

(54) **PREPARATION METHOD OF SUPER ABSORBENT POLYMER**

(57) The present disclosure relates to a preparation method of a super absorbent polymer. More specifically, it relates to a method for preparing a super absorbent polymer having excellent drying efficiency and excellent absorption properties by controlling the initial void formation rate of the polymer during drying, thereby reducing the content of undried crumbs generated.

【FIG. 1】

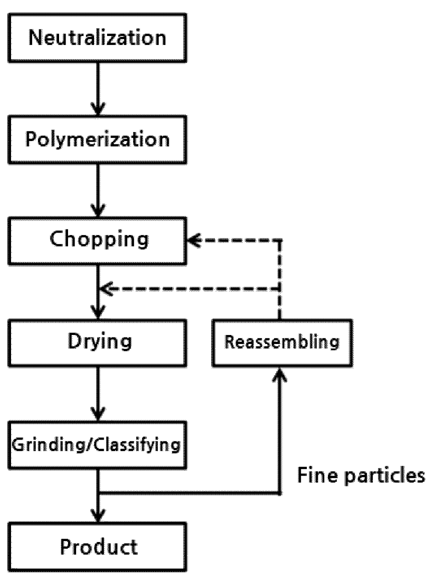


EP 4 620 995 A1

## Description

[TECHNICAL FIELD]

Cross-reference to Related Application(s)

This application claims the benefits of Korean Patent Application No. 10-2022-0181773 filed on December 22, 2022 with the Korean Intellectual Property Office, the disclosure of which is incorporated herein by reference in its entirety.

The present disclosure relates to a preparation method of a super absorbent polymer. More specifically, it relates to a method for preparing a super absorbent polymer having excellent drying efficiency and excellent absorption properties by controlling the initial void formation rate of the polymer during drying, thereby reducing the content of undried crumbs generated.

[BACKGROUND OF ART]

A super absorbent polymer (SAP) is a type of synthetic polymeric material capable of absorbing 500 to 1000 times its own weight of moisture. Various manufacturers have denominated it with different names, such as SAM (Super Absorbency Material), AGM (Absorbent Gel Material), and the like. Such super absorbent polymers started to be practically applied in sanitary products, and they are now being widely used for water retaining soil products for gardening, water stop materials for the civil engineering and construction, sheets for raising seedling, fresh-keeping agents for food distribution fields, materials for poultices, or the like.

These super absorbent polymers have been widely used in the field of hygienic materials such as diapers or sanitary napkins. In such hygienic materials, the super absorbent polymer is generally contained in a state of being spread in the pulp. In recent years, however, continuous efforts have been made to provide hygienic materials such as diapers having a thinner thickness. As a part of such efforts, the development of so-called pulpless diapers and the like in which the pulp content is reduced or pulp is not used at all is being actively advanced.

In the case of the above-described hygienic materials in which the pulp content is reduced or pulp is not used, the super absorbent polymer is included in a relatively high ratio, so that the super absorbent polymer particles are inevitably included in multiple layers in the hygienic materials. In order for the entire super absorbent polymer particles included in multiple layers to more efficiently absorb a large amount of liquid such as urine, the super absorbent polymer basically needs to exhibit excellent absorption performance as well as a high absorption rate.

Meanwhile, such a super absorbent polymer is generally prepared by performing the step of polymerizing monomers to prepare a hydrogel polymer containing a large amount of moisture; and the step of drying the hydrogel polymer, followed by pulverizing the hydrogel polymer into polymer particles having a desired particle diameter. However, when the hydrogel polymer is dried and then pulverized as described above, a large amount of fine powder is generated, which has a problem of lowering physical properties of the super absorbent polymer to be prepared.

In order to reuse the fine powder, it is common to mix the fine powder with water for agglomeration to produce a fine reassembly, and then add the fine reassembly manufactured through processes such as drying/pulverization/classification. However, the water used herein may increase energy usage during the drying process and increase the load on the device, thereby reducing productivity of manufacturing the super absorbent polymer.

In addition, the hydrogel polymer polymerized during the preparation method of the super absorbent polymer has the property of agglomerating with each other, and when manufactured as agglomerated fine particles, the cohesion increases, causing a problem of poor drying in the subsequent drying process. Specifically, this drying process is typically manufactured by applying hot air in a belt dryer equipped with a perforated plate. As the cohesion of the hydrogel polymer increases, the porosity in the dried layer significantly decreases, thereby increasing the differential pressure of hot air, and increasing the amount of undried crumbs. Accordingly, warping occurred on the outer part of the dried layer, making it difficult to dry a large amount.

In other words, when the non-drying rate increases or when the dried crumbs warp, it is difficult to realize the desired physical properties of the product and defects may occur. Therefore, there is a continuous need for the development of technology to increase the drying efficiency without these problems.

[DETAILED DESCRIPTION OF THE INVENTION]

[Technical Problem]

Accordingly, there is provided a super absorbent polymer capable of achieving excellent drying efficiency and excellent absorption properties by controlling the initial void formation rate of the polymer during drying and reducing the content of undried crumbs generated.

[Technical Solution]

In order to solve the above problem, according to one embodiment of the present disclosure, there is provided a preparation method of a super absorbent polymer including the steps of:

performing polymerization on a monomer composition containing a water-soluble ethylene-based unsaturated monomer having acidic groups, an internal cross-linking agent, and a polymerization initiator to form a polymer in which the water-soluble ethylene-based unsaturated monomer having acidic groups and the internal cross-linking agent are cross-link polymerized (step 1);
neutralizing at least some of the acidic groups of the polymer (step 2);
micronizing the polymer in the presence of a surfactant (step 3); and
drying the neutralized and micronized polymer to prepare base resin particles (step 4),
wherein an initial void formation rate of the polymer measured after 30 to 60% of total drying time is 0.8 to 1.7%/min in the step 4.

[ADVANTAGEOUS EFFECTS]

According to the preparation method of a super absorbent polymer of the present disclosure, a super absorbent polymer having excellent absorption properties with excellent drying efficiency can be provided by controlling the initial void formation rate of the polymer during drying, thereby reducing the content of undried crumbs generated during drying.
In addition, according to the preparation method of a super absorbent polymer of the present disclosure, particles in the shape of agglomerated fine particles are realized by going through polymerization in an unneutralized state, neutralization, and micronization under specific conditions. Therefore, the surface area is increased, and thus it is possible to provide a super absorbent polymer exhibiting excellent absorption properties with significantly improved absorption rate.

[BRIEF DESCRIPTION OF THE DRAWINGS]

FIG. 1 is a flowchart of a conventional preparation method of a super absorbent polymer.

[DETAILED DESCRIPTION OF THE EMBODIMENTS]

The terminology used herein is for the purpose of describing particular embodiments only and is not intended to limit the invention. The singular forms are intended to include the plural forms as well, unless the context clearly indicates otherwise. It will be further understood that the terms "include", "have", or "possess" when used in this specification, specify the presence of stated features, steps, components, or combinations thereof, but do not preclude the presence or addition of one or more other features, steps, components, or combinations thereof.
As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.
The terminology used herein is only intended to refer to specific embodiments and is not intended to limit the present invention. Further, as used herein, the singular forms also include the plural forms unless the phrases clearly indicate the opposite.
The terminology "polymer" in the present disclosure is in a state in which water-soluble ethylene-based unsaturated monomers are polymerized, and may include all moisture content ranges, or all particle diameter ranges.
In addition, the terminology "super absorbent polymer" is used to encompass all of a cross-linked polymer or a base resin in the form of powder consisting of super absorbent polymer particles in which the cross-linked polymer is pulverized, and the cross-linked polymer or the base resin further processed, for example, drying, pulverization, classification, surface cross-linking, etc., to be in a state suitable for commercialization, depending on the context.
In addition, the terminology "fine powder" refers to particles having a particle diameter of less than 150 μm among the super absorbent polymer particles. The particle diameter of these polymer particles may be measured according to EDANA (European Disposables and Nonwovens Association) WSP 220.3.
In addition, the terminology "chopping" refers to cutting the hydrogel polymer into small pieces of millimeters in order to increase drying efficiency, and is used separately from pulverization to a level of micrometers or normal particles.
In addition, the terminology "micronizing (micronization)" refers to pulverizing the hydrogel polymer to a particle diameter of several tens to hundreds of micrometers, and is used separately from "chopping".
Hereinafter, the preparation method of a super absorbent polymer and the super absorbent polymer according to

specific embodiments will be described in more detail.

According to one embodiment of the present disclosure, there is provided a preparation method of a super absorbent polymer including the steps of:

performing polymerization on a monomer composition containing a water-soluble ethylene-based unsaturated monomer having acidic groups, an internal cross-linking agent, and a polymerization initiator to form a polymer in which the water-soluble ethylene-based unsaturated monomer having acidic groups and the internal cross-linking agent are cross-link polymerized (step 1);
neutralizing at least some of the acidic groups of the polymer (step 2);
micronizing the polymer in the presence of a surfactant (step 3); and
drying the neutralized and micronized polymer to prepare base resin particles (step 4),
wherein an initial void formation rate of the polymer measured after 30 to 60% of total drying time is 0.8 to 1.7%/min in the step 4.

Generally, the hydrogel polymer obtained by polymerization of acrylic acid-based monomers undergoes processes such as drying, pulverization, classification, and surface cross-linking, and is sold as a super absorbent polymer in the form of powder.

The process of drying the hydrogel polymer of the manufacturing processes was typically performed by applying hot air in a belt dryer equipped with a perforated plate, but there was a problem in that the porosity in the dried layer was significantly reduced due to the increase in cohesion of the hydrogel polymer. In this case, the differential pressure of hot air increased, causing an increase in the amount of undried crumbs. Accordingly, warping occurred on the outer part of the dried layer, making it difficult to dry a large amount, result in reduced process efficiency. Accordingly, when drying excessively to reduce the amount of undried crumbs, the moisture content of the base resin is lowered to about 1 to 2 wt%, which not only increases the generation of fine powder, but also reduces the process efficiency due to energy consumption.

When the moisture content of the base resin is excessively lowered due to overdrying or the generation of undried crumbs increases, it is difficult to realize the desired physical properties of the product and defects may occur, so the present inventors have conducted repeated research to solve this problem. As a result, the present inventors have confirmed that it is possible to manufacture a base resin with a relatively high moisture content while minimizing the generation of undried crumbs when the drying process is performed using a hydrogel polymer polymerized in an unneutralized state and the void formation rate is controlled to a specific range at the beginning of drying, and completed the invention.

Meanwhile, in recent years, attempts have been continuously made to provide a super absorbent polymer exhibiting a more improved absorption rate.

The most common method to increase the absorption rate is to expand the surface area of the super absorbent polymer by forming a porous structure in the super absorbent polymer. In order to increase the surface area of the super absorbent polymer, a method of forming a porous structure in the base resin powder by including a foaming agent in the monomer composition and performing cross-linking polymerization is generally selected.

However, the use of a foaming agent has the disadvantage of lowering physical properties of the super absorbent polymer, such as surface tension, permeability, or bulk density, and increasing the amount of fine powder generated. Accordingly, the development of technology that can improve the absorption rate of the super absorbent polymer without the use of a foaming agent is continuously requested.

Meanwhile, super absorbent polymers are conventionally prepared by performing cross-linking polymerization on a water-soluble ethylene-based unsaturated monomer having at least partially neutralized acidic groups in the presence of an internal cross-linking agent and a polymerization initiator to form a hydrogel polymer, and then drying the formed hydrogel polymer, followed by pulverization to a desired particle size. At this time, a chopping process of cutting the hydrogel polymer into particles of several millimeters is usually performed before the drying process to facilitate drying of the hydrogel polymer and increase the efficiency of the pulverization process. However, due to the stickiness of the hydrogel polymer in this chopping process, the hydrogel polymer cannot be pulverized to micro-sized particles and becomes an aggregated gel. When the hydrogel polymer in the form of an aggregated gel is dried, a plate-shaped dried product is formed. In order to pulverize it to micro-sized particles, a multi-stage pulverization process is required, so there has been a problem in that many fine particles are generated in this process.

Specifically, FIG. 1 is a flowchart of a conventional method of preparing a super absorbent polymer. Referring to FIG. 1, the super absorbent polymer has conventionally been prepared by including the following steps.

(Neutralization) neutralizing at least some of acidic groups of the water-soluble ethylene-based unsaturated monomer;
(Polymerization) forming a hydrogel polymer by cross-linking polymerization of a water-soluble ethylene-based

unsaturated monomer having at least partially neutralized acidic groups in the presence of an internal cross-linking agent and a polymerization initiator;
(Chopping) chopping the hydrogel polymer;
(Drying) drying the chopped hydrogel polymer; and
(Pulverization/classification) pulverizing the dried polymer and then classifying it into normal particles and fine powder;

As described above, the chopped hydrogel polymer has an aggregated gel shape with a size of about 1 cm to 10 cm. Such a chopped hydrogel polymer is laminated on a belt whose bottom is made of a perforated plate, and dried by hot air supplied from the bottom or top. Since the polymer dried by the above drying method has a plate shape rather than a particle shape, the classification step after pulverization has been performed by coarse pulverization, then classification, followed by fine pulverization again, then classification so that the particles to be prepared become normal particles, that is, particles having a particle diameter of 150 μm to 850 μm. Since the amount of the fine powder separated in the final classification step is about 20 wt% to about 30 wt% based on the total weight of the final super absorbent polymer, the separated fine powder was mixed with an appropriate amount of water, reassembled, and then reused by putting it in the chopping step or in the step before drying.
However, problems such as causing an increase in equipment load and/or energy consumption have occurred when a fine reassembly mixed with water is re-injected into the pulverization or drying process for reuse of the fine powder, and the remaining fine powder that has not been classified caused deterioration of physical properties of the super absorbent polymer.
Accordingly, the present inventors have found that the amount of fine powder generated in the conventional preparation method is greatly affected by a pulverization process. In addition, it has been confirmed that the amount of fine powder generated in the preparation process can be significantly reduced by adding a surfactant and a neutralizing agent in the pulverization process of the polymer to post-neutralize and to pulverize more finely, i.e., micronize, while controlling agglomeration, and obtaining particles in which fine particles are agglomerated.
Meanwhile, a method of adding a surfactant was proposed to reduce adhesiveness of the hydrogel polymer in the chopping process. However, when a surfactant is added in the chopping process, the surfactant penetrates the inside of the hydrogel polymer rather than existing at the interface of the hydrogel polymer due to the high water retention capacity of the hydrogel polymer. Therefore, there is a problem in that the surfactant does not properly perform its role.
The chopped particles are formed into particles with a size of several mm to several cm, so the surface area can be increased to some extent compared to the polymer before chopping, but it is difficult to expect an effect that can effectively improve the absorption rate. Accordingly, in order to improve the absorption rate, a method of increasing the surface area by kneading with the increased mechanical force in the chopping step can be considered. However, excessive agglomeration occurs in this case due to the polymer's stickiness, amorphous single particles are formed with only the particle surface being uneven after chopping, drying and pulverization, and excessive kneading or crushing may actually increase the extractable components.
As a result of repeated research to solve this problem, it was confirmed that when polymerization is first performed in a state where the acidic groups are not neutralized to form a polymer, the hydrogel polymer is micronized in the presence of a surfactant, and then the acidic groups of the polymer are neutralized; when the acidic groups of the polymer are neutralized to form a hydrogel polymer, and then the hydrogel polymer is micronized in the presence of a surfactant; or when the acidic groups present in the polymer are neutralized at the same time as micronization, unlike the conventional preparation method of a super absorbent polymer in which polymerization was not performed in a state where the acidic groups of the water-soluble ethylene-based unsaturated monomer were neutralized, a large amount of surfactant is present on the surface of the polymer, and it can sufficiently play the role of lowering the high adhesiveness of the polymer, preventing excessive agglomeration of the polymer, and controlling the state of agglomeration to a desired level.
Accordingly, the amount of fine powder generated during the process can be significantly reduced by making the polymer into secondary particles in which primary particles are aggregated, and then performing the pulverization and drying processes under milder conditions.
In addition, when the polymer is pulverized in the presence of a surfactant, hydrophobicity is imparted to the surface of the pulverized super absorbent polymer particles by a hydrophobic functional group included in the surfactant, thereby reducing the frictional force between the particles and increasing the bulk density of the super absorbent polymer. Further, a hydrophilic functional group included in the surfactant may also be bonded to the super absorbent polymer particles so that the surface tension of the polymer may not be lowered. Accordingly, the super absorbent polymer prepared according to the above-described method may have a high bulk density while exhibiting similar surface tension compared with a polymer without using a surfactant.
In addition, when polymerization is first performed in an unneutralized state to form a polymer, and then acidic groups present in the polymer are neutralized, a longer chain polymer can be formed and cross-linking is incomplete, so

that it is possible to reduce the content of extractable components present in a non-crosslinked state.

The extractable component has a property of being easily eluted when the super absorbent polymer comes into contact with a liquid. When the content of the extractable components is high, most of the eluted extractable components remain on the surface of the super absorbent polymer and make the super absorbent polymer sticky, thereby reducing permeability. Therefore, it is important to keep the content of extractable components low in terms of permeability.

According to one embodiment of the present disclosure, as the polymerization is performed in an unneutralized state, the content of extractable components is lowered, and thus permeability of the super absorbent polymer can be improved.

Further, the super absorbent polymer prepared according to one embodiment of the present disclosure may have a uniform particle size distribution, and thus it is possible to provide a super absorbent polymer excellent in absorption properties such as water retention capacity and absorbency under pressure, rewet characteristics, and absorption rate.

Hereinafter, the preparation method of a super absorbent polymer of one embodiment will be described in more detail for each step.

## Step 1: Polymerization step

First, polymerization is performed on a monomer composition containing a water-soluble ethylene-based unsaturated monomer having acidic groups, an internal cross-linking agent, and a polymerization initiator to form a polymer in which the water-soluble ethylene-based unsaturated monomer having acidic groups and the internal cross-linking agent are cross-link polymerized.

The above step may include a step of preparing a monomer composition by mixing the water-soluble ethylene-based unsaturated monomer having acidic groups, an internal cross-linking agent, and a polymerization initiator, and a step of polymerizing the monomer composition to form a polymer.

The water-soluble ethylene-based unsaturated monomer may be any monomer commonly used in the preparation of a super absorbent polymer. Specifically, the water-soluble ethylene-based unsaturated monomer may be a compound represented by the following Chemical Formula 1:

[Chemical Formula1] R-COOM'

in Chemical Formula 1,

R is a C2 to C5 alkyl group having an unsaturated bond, and
M' is a hydrogen atom, a monovalent or divalent metal, an ammonium group, or an organic amine salt.

Preferably, the monomer may be at least one selected from the group consisting of (meth)acrylic acid, and a monovalent (alkali)metal salt, a divalent metal salt, an ammonium salt and an organic amine salt of the acid.

When (meth)acrylic acid and/or a salt thereof is used as a water-soluble ethylene-based unsaturated monomer, it is advantageous to obtain a super absorbent polymer having improved absorption performance. In addition, maleic anhydride, fumalic acid, crotonic acid, itaconic acid, 2-acryloylethane sulfonic acid, 2-methacryloylethane sulfonic acid, 2-(meth)acryloylpropanesulfonic acid, 2-(meth)acrylamide-2-methyl propanesulfonic acid, (meth)acrylamide, N-substituted (meth)acrylate, 2-hydroxyethyl(meth)acrylate, 2-hydroxypropyl(meth)acrylate, methoxypolyethyleneglycol(meth) acrylate, polyethyleneglycol(meth)acrylate, (N,N)-dimethylaminoethyl(meth)acrylate, (N,N)-dimethylaminopropyl(meth) acrylamide may be used as the monomer.

Herein, the water-soluble ethylene-based unsaturated monomer has acidic groups. As described above, a hydrogel polymer was formed by cross-linking polymerization of a monomer in which at least some of the acidic groups are neutralized by a neutralizing agent. Specifically, in the step of mixing the water-soluble ethylene-based unsaturated monomer having an acidic group, an internal cross-linking agent, a polymerization initiator, and a neutralizing agent, at least some of the acidic groups of the water-soluble ethylene-based unsaturated monomer were neutralized.

However, according to one embodiment of the present disclosure, polymerization is first performed in a state where acidic groups of the water-soluble ethylene-based unsaturated monomer are not neutralized to form a polymer.

The water-soluble ethylene-based unsaturated monomers (e.g., acrylic acid) in a state where acidic groups are not neutralized are in a liquid state at room temperature, and have high miscibility with a solvent (water), and thus exist in the monomer composition in the form of a mixed solution. However, the water-soluble ethylene-based unsaturated monomers in which the acidic groups are neutralized are in a solid state at room temperature, have different solubility depending on the temperature of the solvent (water), and has lower solubility at a lower temperature.

The water-soluble ethylene-based unsaturated monomers in which acidic groups are not neutralized have higher solubility or miscibility with a solvent (water) than monomers in which acidic groups are neutralized, so that they do not precipitate even at low temperatures, and thus are advantageous for long-term polymerization at low temperatures.

Accordingly, it is possible to stably form a polymer having a higher molecular weight and a uniform molecular weight distribution by performing polymerization for a long time using the water-soluble ethylene-based unsaturated monomer in which acidic groups are not neutralized.

In addition, it is possible to form a long chain polymer, thereby achieving an effect of reducing the content of extractable components present in a non-crosslinked state due to incomplete polymerization or cross-linking.

In addition, when polymerization is first performed in a state where the acidic groups of the monomer are not neutralized to form a polymer, and then micronization is performed in the presence of a surfactant after neutralization; neutralization is performed after micronization in the presence of a surfactant; or the acidic groups present in the polymer are neutralized at the same time as micronization, a large amount of surfactant may be present on the surface of the polymer to sufficiently play a role of lowering the adhesiveness of the polymer.

The concentration of the water-soluble ethylene-based unsaturated monomer in the monomer composition may be about 20 to 60 wt%, or about 20 to 40 wt% in consideration of polymerization time and reaction conditions.

The term 'internal cross-linking agent' as used herein is a term used to distinguish it from a surface cross-linking agent commonly used for cross-linking the surface of super absorbent polymer particles, and serves to form a polymer having a cross-linked structure by introducing cross-links between the unsaturated bonds of the water-soluble ethylene-based unsaturated monomers described above.

The cross-linking in the above step proceeds both on the surface and on the inside, but when the surface cross-linking process of the super absorbent polymer particles proceeds, the surface of the particles of the finally prepared super absorbent polymer may have a structure newly cross-linked by a surface cross-linking agent, and the inside of the particles may maintain the structure cross-linked by the internal cross-linking agent.

According to one embodiment of the present disclosure, the internal cross-linking agent may include any one or more of a multifunctional acrylate-based compound, a multifunctional allyl-based compound, or a multifunctional vinyl-based compound.

Non-limiting examples of the multifunctional acrylate-based compound may include ethylene glycol di(meth)acrylate, diethylene glycol di(meth)acrylate, triethylene glycol di(meth)acrylate, tetraethylene glycol di(meth)acrylate, polyethylene glycol di(meth)acrylate, propylene glycol di(meth)acrylate, tripropylene glycol di(meth)acrylate, polypropylene glycol di(meth)acrylate, butanediol di(meth)acrylate, butylene glycol di(meth)acrylate, hexanediol di(meth)acrylate, pentaerythritol di(meth)acrylate, pentaerythritol tri(meth)acrylate, pentaerythritol tetra(meth)acrylate, dipentaerythritol di(meth)acrylate, dipentaerythritol tri(meth)acrylate, dipentaerythritol tetra(meth)acrylate, dipentaerythritol penta(meth)acrylate, trimethylolpropane di(meth)acrylate, trimethylolpropane tri(meth)acrylate, glycerin di(meth)acrylate, and glycerin tri(meth)acrylate, and these can be used alone or in combination of two or more types.

Non-limiting examples of the multifunctional allyl-based compound may include ethylene glycol diallyl ether, diethylene glycol diallyl ether, triethylene glycol diallyl ether, tetraethylene glycol diallyl ether, polyethylene glycol diallyl ether, propylene glycol diallyl ether, tripropylene glycol diallyl ether, polypropylene glycol diallyl ether, butanediol diallyl ether, butylene glycol diallyl ether, hexanediol diallyl ether, pentaerythritol diallyl ether, pentaerythritol triallyl ether, pentaerythritol tetraallyl ether, dipentaerythritol diallyl ether, dipentaerythritol triallyl ether, dipentaerythritol tetraallyl ether, dipentaerythritol pentaallyl ether, trimethylolpropane diallyl ether, trimethylolpropane triallyl ether, glycerol diallyl ether, and glycerin triallyl ether, and these can be used alone or in combination of two or more types.

Non-limiting examples of the multifunctional vinyl-based compound may include ethylene glycol divinyl ether, diethylene glycol divinyl ether, triethylene glycol divinyl ether, tetraethylene glycol divinyl ether, polyethylene glycol divinyl ether, propylene glycol divinyl ether, tripropylene glycol divinyl ether, polypropylene glycol divinyl ether, butanediol divinyl ether, butylene glycol divinyl ether, hexanediol divinyl ether, pentaerythritol divinyl ether, pentaerythritol trivinyl ether, pentaerythritol tetravinyl ether, dipentaerythritol divinyl ether, dipentaerythritol trivinyl ether, dipentaerythritol tetravinyl ether, dipentaerythritol pentavinyl ether, trimethylolpropane divinyl ether, trimethylolpropane trivinyl ether, glycerin divinyl ether, and glycerin trivinyl ether, and these can be used alone or in combination of two or more types. Preferably, pentaerythritol triallyl ether can be used.

In the above-mentioned multifunctional allyl-based compound or multifunctional vinyl-based compound, two or more unsaturated groups contained in the molecule are bonded to the unsaturated bond of water-soluble ethylene-based unsaturated monomers or the unsaturated bond of another internal cross-linking agent, thereby forming a cross-linked structure during the polymerization process. In addition, unlike acrylate-based compounds containing an ester bond (-(C=O)O-) in the molecule, cross-linking can be maintained more stably even during the neutralization process after the polymerization reaction described above.

Accordingly, the gel strength of the final super absorbent polymer can be increased, process stability can be increased during the discharge process after polymerization, and the amount of extractable components can be minimized.

The cross-linking polymerization of the water-soluble ethylene-based unsaturated monomer in the presence of an internal cross-linking agent may be performed in the presence of a polymerization initiator, if necessary, a thickener, a plasticizer, a storage stabilizer, an antioxidant, etc.

The internal cross-linking agent may be used in an amount of 0.01 to 5 parts by weight based on 100 parts by weight of the water-soluble ethylene-based unsaturated monomer in the monomer composition. For example, the internal cross-linking agent may be used in an amount of 0.01 parts by weight or more, 0.05 parts by weight or more, or 0.1 parts by weight or more, and 5 parts by weight or less, 3 parts by weight or less, 2 parts by weight or less, 1 parts by weight or less, or 0.7 parts by weight or less. When the content of the internal cross-linking agent is too low, cross-linking does not occur sufficiently, making it difficult to realize a strength above an appropriate level. When the content of the internal cross-linking agent is too high, the internal cross-linking density increases, making it difficult to realize a desired water retention capacity.

The polymer formed using such an internal cross-linking agent has a three-dimensional network structure in which main chains formed by polymerizing the water-soluble ethylene-based unsaturated monomers are cross-linked by the internal cross-linking agent. When the polymer has the three-dimensional network structure in this way, the centrifuge retention capacity and absorbency under pressure, which are various physical properties of the super absorbent polymer, can be significantly improved compared to the polymer with a two-dimensional linear structure that is not additionally cross-linked by an internal cross-linking agent.

According to one embodiment of the present disclosure, the step of forming a polymer by performing polymerization on the monomer composition may be performed in a batch type reactor.

In the conventional method for preparing a super absorbent polymer composition, the polymerization method is largely divided into the thermal polymerization and the photopolymerization according to an energy source of the polymerization. In the case of thermal polymerization, it is generally carried out in a reactor equipped with an agitation spindle, such as a kneader. In the case of photopolymerization, it may be carried out in a reactor equipped with a movable conveyor belt or in a container with a flat bottom.

Meanwhile, when photopolymerization is performed in the reactor equipped with a movable conveyor belt or in a container with a flat bottom, a hydrogel polymer in the form of a sheet having a belt width may usually be obtained. At this time, a thickness of the polymer sheet may vary depending on the concentration and injection rate or amount of the monomer composition to be injected, and it may be about 0.5 to about 5 cm.

When the monomer composition is supplied to such an extent that the thickness of the polymer sheet is too thin, the production efficiency may be low, which is undesirable. When the thickness of the polymer on the sheet is increased for productivity, the polymerization reaction does not occur evenly over the entire thickness, making it difficult to form a high-quality polymer.

In addition, the polymerization in the reactor equipped with a conveyor belt and an agitation spindle is performed in a continuous manner by supplying a new monomer composition to the reactor while the polymerization product is moving. Therefore, polymers having different degrees of polymerization are mixed, and accordingly, it is difficult to achieve uniform polymerization throughout the monomer composition, and overall physical properties may be deteriorated.

However, according to one embodiment of the present disclosure, as the polymerization proceeds in a fixed-bed type in a batch reactor, there is little risk of mixing polymers having different degrees of polymerization, and accordingly, polymers having uniform quality can be obtained.

In addition, the polymerization step is performed in a batch-type reactor having a predetermined volume, and the polymerization reaction is performed for a longer period of time, for example, 3 hours or more, than polymerization in a continuous manner in a reactor equipped with a conveyor belt. Despite the long polymerization time as described above, monomers are not easily precipitated because the polymerization is performed on unneutralized water-soluble ethylene-based unsaturated monomers. Therefore, it is advantageous to perform polymerization for a long time.

Meanwhile, as the polymerization in the batch reactor of the present disclosure uses a thermal polymerization method, a thermal polymerization initiator is used as the polymerization initiator.

In addition, one or more initiators selected from the group consisting of a persulfate-based initiator, an azo-based initiator, hydrogen peroxide, and ascorbic acid may be used as the thermal polymerization initiator. Specifically, sodium persulfate ($Na_2S_2O_8$), potassium persulfate ($K_2S_2O_8$), ammonium persulfate ($(NH_4)_2S_2O_8$), and the like may be used as examples of the persulfate-based initiators; and 2,2-azobis(2-amidinopropane) dihydrochloride, 2,2-azobis-(N,N-dimethylene)isobutyramidine dihydrochloride, 2-(carbamoylazo)isobutylonitril, 2,2-azobis[2-(2-imidazolin-2-yl)propane] dihydrochloride, 4,4-azobis-(4-cyanovaleric acid), and the like may be used as examples of the azo-based initiators. More various thermal polymerization initiators are well disclosed in 'Principle of Polymerization (Wiley, 1981)' written by Odian, p 203, and the present disclosure is not limited thereto.

The polymerization initiator may be used in an amount of 2 parts by weight or less based on 100 parts by weight of the water-soluble ethylene-based unsaturated monomer. When the concentration of the polymerization initiator is excessively low, the polymerization rate may become slow, and a large amount of residual monomers may be extracted from the final product. Conversely, when the concentration of the polymerization initiator is higher than the above range, polymer chains forming a network are shortened, so that the extractable content increases and absorbency under pressure decreases, thereby lowering physical properties of the polymer.

Meanwhile, in one embodiment of the present disclosure, polymerization may be initiated by adding a reducing agent forming a redox couple with the initiator.

Specifically, when the initiator and the reducing agent are added to the polymer solution, they react with each other to form radicals.

Since the formed radicals react with the monomer, and the oxidation-reduction reaction between the initiator and the reducing agent is very reactive, polymerization is initiated even when only a small amount of initiator and reducing agent are added, so there is no need to increase the process temperature. Therefore, low-temperature polymerization is possible, and changes in physical properties of the polymer solution can be minimized.

The polymerization reaction using the oxidation-reduction reaction can occur smoothly even at a temperature around or below room temperature (25 °C). For example, the polymerization reaction may be performed at a temperature of 5 °C or higher and 25 °C or lower, or 5 °C or higher and 20 °C or lower.

In one embodiment of the present disclosure, when a persulfate-based initiator is used as the initiator, the reducing agent may be at least one selected from the group consisting of sodium metabisulfite ($Na_2S_2O_5$), tetramethyl ethylenediamine (TMEDA), a mixture of iron sulfate (II) and EDTA ($FeSO_4$/EDTA), sodium formaldehyde sulfoxylate, and disodium 2-hydroxy-2-sulfinoacteate.

In one example, potassium persulfate is used as the initiator and disodium 2-hydroxy-2-sulfinoacetate is used as the reducing agent; ammonium persulfate is used as the initiator and tetramethylethylenediamine is used as the reducing agent; or sodium persulfate is used as the initiator and sodium formaldehyde sulfoxylate is used as the reducing agent.

In another embodiment of the present disclosure, when a hydrogen peroxide-based oxidizing agent is used as the initiator, the reducing agent may be at least one selected from the group consisting of ascorbic acid, sucrose, sodium sulfite ($Na_2SO_3$), sodium metabisulfite ($Na_2S_2O_5$), tetramethyl ethylenediamine (TMEDA), a mixture of iron sulfate (II) and EDTA ($FeSO_4$/EDTA), sodium formaldehyde sulfoxylate, disodium 2-hydroxy-2-sulfinoacteate and disodium 2-hydroxy-2-sulfinoacteate.

The monomer composition may further include additives such as a thickener, a plasticizer, a storage stabilizer, and an antioxidant, if necessary.

Further, the monomer composition including the monomer may be, for example, in the form of a solution dissolved in a solvent such as water, and the solid content in the monomer composition in the form of a solution, that is, the concentration of the monomer, internal cross-linking agent, and polymerization initiator can be appropriately adjusted in consideration of the polymerization time and reaction conditions. For example, the solid content in the monomer composition may be 10 to 80 wt%, 15 to 60 wt%, or 30 to 50 wt%.

At this time, any solvent which can dissolve the above components may be used without limitation. For example, the solvent may be in combination of at least one selected from water, ethanol, ethyleneglycol, diethyleneglycol, triethyleneglycol, 1,4-butanediol, propyleneglycol, ethyleneglycol monobutylether, propyleneglycol monomethylether, propyleneglycol monomethylether acetate, methylethylketone, acetone, methylamylketone, cyclohexanone, cyclopentanone, diethyleneglycol monomethylether, diethyleneglycol ethylether, toluene, xylene, butyrolactone, carbitol, methylcellosolve acetate, and N,N-dimethylacetamide.

As the polymer obtained in this way is polymerized using unneutralized ethylene-based unsaturated monomers, a polymer having a high molecular weight and a uniform molecular weight distribution can be formed, and the content of extractable components can be reduced.

The polymer obtained in this way is a hydrogel polymer and may have a moisture content of 30 to 80 wt%. For example, the moisture content of the polymer may be 30 wt% or more, 45 wt% or more, or 50 wt% or more, and 80 wt% or less, 70 wt% or less, or 60 wt% or less.

When the moisture content of the polymer is too low, it may not be effectively pulverized because it is difficult to secure an appropriate surface area in the subsequent pulverization step. When the moisture content of the polymer is too high, it may be difficult to pulverize the polymer to a desired particle size due to increased pressure applied in the subsequent pulverization step.

At this time, "moisture content" in the present disclosure is the content of moisture in the entire weight of the polymer, and it means a value of which the weight of the dried polymer is subtracted from the weight of the polymer. Specifically, the moisture content is defined as a value calculated by measuring the weight loss due to moisture evaporation from the polymer in the process of increasing the temperature of the polymer in a crumb state and drying the same through infrared heating. At this time, the drying condition for measuring the moisture content is as follows: the temperature is increased to about 180 °C and maintained at 180 °C, and the total drying time is 40 minutes including 5 minutes of a heating step.

**Step 2: Neutralization step and Step 3: Micronization step**

Next, a step of neutralizing at least some of the acidic groups of the polymer (step 2) is performed.

Herein, a basic material such as sodium hydroxide, potassium hydroxide, or ammonium hydroxide capable of neutralizing the acidic group may be used as the neutralizing agent.

In addition, the degree of neutralization, which refers to the degree of neutralization by the neutralizing agent

among the acidic groups included in the polymer, may preferably be 50 to 90 mol%, 60 to 85 mol%, 65 to 85 mol%, or 65 to 75 mol%. A range of the degree of neutralization may vary depending on the final physical properties. When the degree of neutralization is excessively high, the absorbency of the super absorbent polymer may decrease, and the concentration of carboxyl groups on the surface of the particles is too low, making it difficult to properly perform surface cross-linking in a subsequent process, resulting in reduced absorbency under pressure or liquid permeability. On the contrary, an excessively low degree of neutralization not only deteriorates absorbency of the polymer, but also gives the polymer hard-to-handle properties, such as those of an elastic rubber.

Simultaneously with step 2, or before or after step 2, a step of micronizing the polymer in the presence of a surfactant (step 3) is performed. That is, the step 2 and the step 3 may be performed sequentially, alternately, or simultaneously.

The step 3 is a step of micronizing the polymer in the presence of a surfactant, and is a step in which the hydrogel polymer is not chopped to millimeters, but simultaneously cut to tens to hundreds of micrometers and agglomerated. That is, this is a step of preparing secondary agglomerated particles in which primary particles cut into tens to hundreds of micrometers are agglomerated by imparting appropriate adhesiveness to the hydrogel polymer. The hydrous super absorbent polymer particles, which is a secondary agglomerated particle prepared in this step, has a normal particle size distribution and greatly increased surface area, so that the absorption rate can be remarkably improved.

As described above, after mixing the polymer and the surfactant, the polymer is micronized in the presence of the surfactant, so that hydrous super absorbent polymer particles (=neutralized and micronized polymer) in the form of secondary agglomerated particles in which the super absorbent polymer particles and the surfactant are mixed, and then cut and agglomerated may be prepared.

Herein, the "hydrous super absorbent polymer particles" refer to particles having a moisture content of about 30 wt% or more, and is prepared by cutting the polymer into particles, followed by agglomeration without a drying process. Accordingly, they may have a moisture content of 30 to 80 wt% similarly to the polymer.

According to one embodiment of the present disclosure, the surfactant may be a compound represented by the following Chemical Formula 2 or a salt thereof, but the present disclosure is not limited thereto:

[Chemical Formula 2]

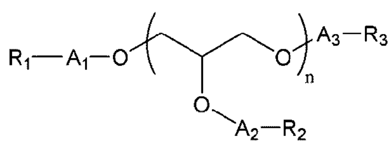

in Chemical Formula 2,

$A_1$, $A_2$ and $A_3$ are each independently a single bond, carbonyl,

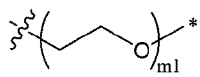
,

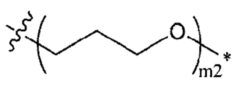
or
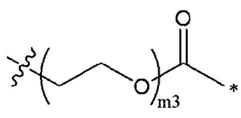
,

provided that at least one of these is carbonyl, or

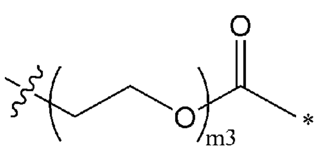
,

wherein m1, m2 and m3 are each independently an integer of 1 to 8, each

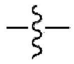

is connected to an adjacent oxygen atom, and  is connected to adjacent $R_1$, $R_2$ and $R_3$, respectively, $R_1$, $R_2$ and $R_3$ are each independently hydrogen, C6 to C18 linear or branched alkyl or C6 to C18 linear or branched alkenyl, and
n is an integer of 1 to 9.

The surfactant is mixed with the polymer and added so that the micronization step can be easily performed without agglomeration.

The surfactant represented by the Chemical Formula 2 is a nonionic surfactant and has excellent surface adsorption performance by hydrogen bonding even with an unneutralized polymer, and thus is suitable for realizing a desired agglomeration control effect. On the other hand, in the case of an anionic surfactant other than the nonionic surfactant, when mixed with a polymer neutralized with a neutralizing agent such as NaOH or $Na_2SO_4$, it is adsorbed via the Na+ ion ionized at the carboxyl substituent of the polymer. When mixed with an unneutralized polymer, there is a problem in that adsorption efficiency for the polymer is relatively lowered due to competition with the anion of the carboxyl substituent of the polymer.

Specifically, in the surfactant represented by the Chemical Formula 2, the hydrophobic functional group is the terminal functional group of $R_1$, $R_2$, and $R_3$ (if not hydrogen), and the hydrophilic functional group includes the glycerol-derived part in the chain and the terminal hydroxyl group (when $A_n$ is a single bond and $R_n$ is hydrogen, n=1~3). Herein, the glycerol-derived part and the terminal hydroxyl group are hydrophilic functional groups and serve to improve adsorption performance to the polymer surface. Accordingly, agglomeration of the super absorbent polymer particles can be effectively suppressed.

In Chemical Formula 2, the hydrophobic functional groups of $R_1$, $R_2$, and $R_3$ (if not hydrogen) are each independently C6 to C18 linear or branched alkyl or C6 to C18 linear or branched alkenyl. At this time, when $R_1$, $R_2$, and $R_3$ (if not hydrogen) are alkyl or alkenyl having less than 6 carbon atoms, there is a problem in that the chain length is too short to effectively control the agglomeration of the pulverized particles. When $R_1$, $R_2$, and $R_3$ (if not hydrogen) are alkyl or alkenyl having more than 18 carbon atoms, there may be problems in that the surfactant has reduced mobility and may not be effectively mixed with the polymer, and the unit price of the composition increases due to the increase in cost of the surfactant.

Preferably, $R_1$, $R_2$, and $R_3$ are hydrogen, C6 to C18 linear or branched alkyl such as 2-methylhexyl, n-heptyl, 2-methylheptyl, n-octyl, n-nonyl, n-decanyl, n-undecanyl, n-dodecanyl, n-tridecanyl, n-tetradecanyl, n-pentadecanyl, n-hexadecanyl, n-heptadecanyl, or n-octadecanyl, or C6 to C18 linear or branched alkenyl such as 2-hexenyl, 2-heptenyl, 2-octenyl, 2-nonenyl, n-decenyl, 2-undecenyl, 2-dodekenyl, 2-tridekenyl, 2-tetradekenyl, 2-pentadekenyl, 2-hexadekenyl, 2-heptadekenyl, or 2-octadekenyl.

The surfactant may be selected from compounds represented by the following Chemical Formulae 2-1 to 2-14:

[Chemical Formula 2-1]

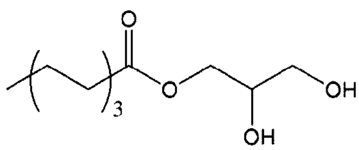

[Chemical Formula 2-2]

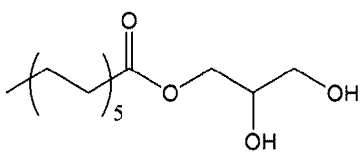

[Chemical Formula 2-3]

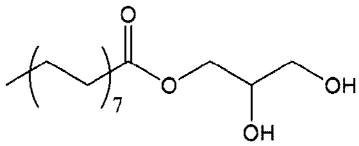

[Chemical Formula 2-4]

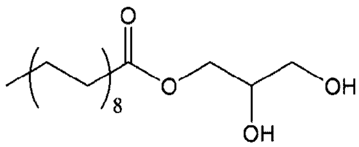

[Chemical Formula 2-5]

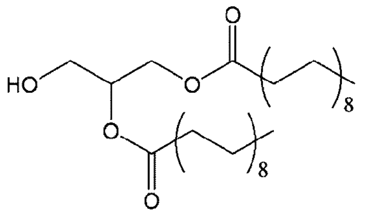

[Chemical Formula 2-6]

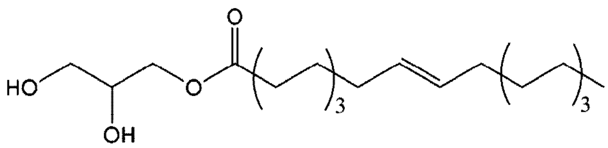

[Chemical Formula 2-7]

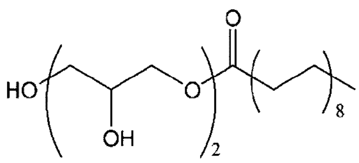

[Chemical Formula 2-8]

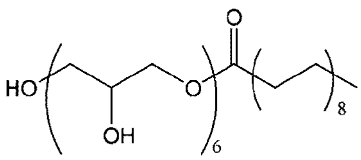

[Chemical Formula 2-9]

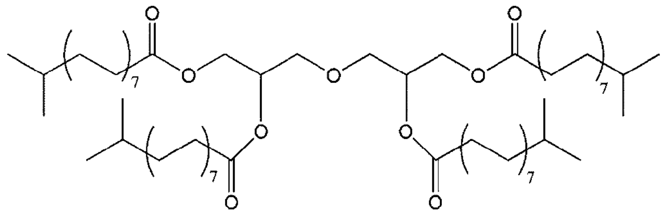

[Chemical Formula 2-10]

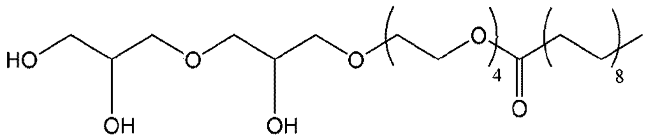

[Chemical Formula 2-11]

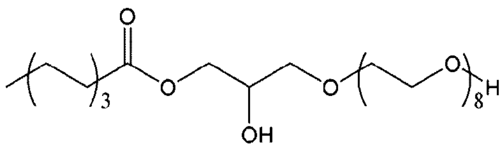

[Chemical Formula 2-12]

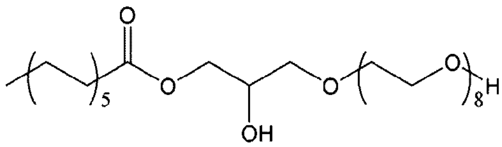

[Chemical Formula 2-13]

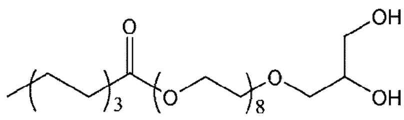

[Chemical Formula 2-14]

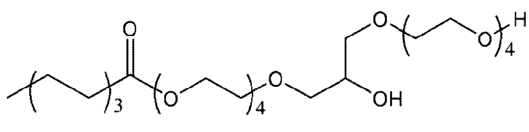

.

Meanwhile, the surfactant may be used in an amount of about 3 parts by weight or less, preferably 2 parts by weight or less, 1 part by weight, 0.5 parts by weight, 0.1 parts by weight, 0.01 parts by weight or less, or 0.001 parts by weight or less, based on 100 parts by weight of the polymer. When too much surfactant is used, the surface tension may be lowered, and thus overall physical properties of the final super absorbent polymer may decrease.

The method of mixing the surfactant with the polymer is not particularly limited, and may be appropriately selected as long as it is a method capable of evenly mixing the additive with the hydrogel polymer. Specifically, the surfactant may be dry-mixed, dissolved in a solvent and then mixed in a solution state, or melted and then mixed.

For example, the surfactant may be mixed in the form of a solution dissolved in a solvent. At this time, all kinds of solvents including inorganic solvents and organic solvents may be used without limitation, but water is most appropriate considering the ease of the drying process and the cost of the solvent recovery system. Further, a method of adding the surfactant in the form of a solution and the polymer in a reaction tank for mixing, a method of spraying the solution after adding the polymer in a mixer, a method of continuously supplying the polymer and the solution to a continuously operating mixer for mixing, or the like may be used.

Meanwhile, according to one embodiment of the present disclosure, the step of neutralizing at least some of the acidic groups of the polymer (step 2) and the step of micronizing the polymer in the presence of a surfactant (step 3) may be performed sequentially, alternately or simultaneously. Meanwhile, the polymer agglomeration process may be performed simultaneously in the step of neutralizing the acidic groups.

In other words, a neutralizing agent may be added to the polymer to first neutralize the acidic groups, and then a surfactant may be added to the neutralized polymer to micronize the polymer mixed with the surfactant (perform in the order of step 2 -> step 3). Alternatively, neutralization and micronization may be performed on the polymer by simultaneously adding a neutralizing agent and a surfactant to the polymer (perform step 2 and step 3 simultaneously). Alternatively, a surfactant may be added first and a neutralizer may be added later (perform in the order of step 3 -> step 2). Alternatively, a neutralizing agent and a surfactant may be added alternately. Alternatively, a surfactant may be first added to micronize, then a neutralizing agent may be added to neutralize the product, and then an additional surfactant may be added to the neutralized hydrogel polymer to further perform the micronization process.

Meanwhile, in order to evenly neutralize the entire polymer, it may be desirable to leave a certain time gap between the addition of the neutralizing agent and the micronization process.

At least some or a significant amount of the surfactant may be present on a surface of the hydrous super absorbent polymer particles.

Herein, "at least some or a significant amount of the surfactant is present on a surface of the hydrous super absorbent polymer particles" means that at least some or a significant amount of the surfactant is adsorbed or bonded on the surface of the hydrous super absorbent polymer particles. Specifically, the surfactant may be physically or chemically adsorbed on the surface of the super absorbent polymer. More specifically, the hydrophilic functional group of the surfactant may be physically adsorbed on the hydrophilic moiety of the surface of the super absorbent polymer by an intermolecular force such as dipole-dipole interaction. In this way, each hydrophilic moiety of the surfactant is physically adsorbed on the surface of the super absorbent polymer particles to surround the surface, and each hydrophobic moiety of the surfactant is not adsorbed on the surface of the polymer particles, so each surfactant may be coated on the surface of the polymer particles in the form of a micelle structure. This is because the surfactant is not added during the polymerization process of the water-soluble ethylene-based unsaturated monomer, but is added in the micronization step after polymer formation. In this case, it is possible to sufficiently perform its role as a surfactant compared to the case where the surfactant is added during the polymerization process and the surfactant is present inside the polymer, and pulverization and agglomeration occur simultaneously, so that particles with a large surface area can be obtained in the form of agglomerated fine particles.

According to one embodiment of the present disclosure, the micronization step is performed using a micronization device, for example, using a micronization device including a perforated plate with a plurality of holes having a diameter of 1 mm to 20 mm. When using a perforated plate having holes within the above range, it is more suitable for improving the efficiency of the drying process to be described later.

More specifically, the micronization device may include a body including a transfer space in which a polymer is transferred; a screw part rotatably installed inside the transfer space to move the polymer; a driving motor providing rotational driving force to the screw part; a cutter part installed in the body to pulverize the polymer; and a perforated plate having a plurality of holes and capable of discharging the polymer pulverized by the cutter part to the outside of the body. Herein, the hole size provided in the perforated plate of the micronization device may be 1 mm to 20 mm, 5 mm to 15 mm, or 5 mm to 12 mm.

When the polymer mixed with the surfactant is micronized while controlling agglomeration using the micronization device, a smaller particle size distribution is realized, and then the drying and pulverization processes can be performed under milder conditions, thereby preventing the generation of fine particles and improving physical properties of the super absorbent polymer.

According to one embodiment of the present disclosure, the step of preparing hydrous super absorbent polymer particles by micronizing the polymer may be performed one or more times, preferably 1 to 6 times, 1 to 4 times, or 1 to 3 times. This may be performed using a plurality of micronization devices, or a single micronization device including a plurality of perforated plates and/or a plurality of cutter parts. Alternatively, some of the micronization devices may have a plurality of perforated plates, and/or a plurality of cutter parts.

**Step 4: Drying step**

Next, a step (step 4) of preparing base resin particles by drying the neutralized and micronized polymer (or hydrous super absorbent resin particles) is performed.

This step is a step in which at least some of the acidic groups of the polymer are neutralized and the moisture in the polymer obtained by micronizing the polymer in the presence of a surfactant is dried.

Specifically, in the present disclosure, when performing the drying process using the hydrogel polymer polymerized in an unneutralized state as described above, the void formation rate is controlled to a specific range at the beginning of the drying process, thereby preparing base resin particles having a relatively high moisture content while minimizing the generation of undried crumbs.

Accordingly, in the drying step of step 4, an initial void formation rate of the polymer satisfies 0.8 to 1.7%/min when 30 to 60% of total drying time has elapsed.

Herein, the initial void formation rate is an indicator that can determine drying uniformity by influencing the formation of a drying channel during the drying process. The initial void formation rate can satisfy the above-mentioned range by adjusting the polymerization conditions, micronization conditions, and drying conditions. Herein, the 'initial' may mean when 30 to 60% of the total drying time has elapsed.

When the initial void formation rate is less than 0.8%/min, the drying channel may not be sufficiently secured and uneven drying may occur. When it exceeds 1.7%/min, heat exchange may not occur and hot air may leak. Accordingly, the initial void formation rate may be preferably 1.0 to 1.5%/min, and more preferably 1.0%/min to 1.35%/min.

The initial void formation rate may be calculated by the following Equation 1:

[Equation 1]

$$\text{Initial void formation rate (\%/min)} = (R_B2-R_B1)/(t1-t0)*100$$

in the above Equation, $R_B$ refers to a void volume ratio and is defined as a ratio of void volume ($V_B$) to total bulk volume (V).

t1 is the time at which drying begins, for example, may refer to the point at which the neutralized and micronized polymer (or hydrous super absorbent polymer particles) is added to a dryer, or the point of heating after addition. When calculating, t1 may be 0.

t2 is the time at which 30 to 60% of total drying time has elapsed, for example, may refer to the time at any point where 30 to 60% of the total drying time has elapsed. Specifically, it may refer to the point at which 30 to 60% has elapsed after the neutralized and micronized polymer (or hydrous super absorbent polymer particles) is added to the dryer, or the point at which 30 to 60% has elapsed after the heating process has been performed after the addition.

$R_B1$ and $R_B2$ refer to $R_B$ values at t1 and t2, respectively.

The initial void formation rate can be measured using XRM (manufacturer: ZEISS, model name: Xradia 620 Versa), and the specific measurement method will be described in Experimental Examples to be described later.

Preferably, the drying step of step 4 may be performed using a fixed-bed type belt drying device. The fixed-bed type method is distinguished from the moving type by the presence or absence of movement of the material during drying.

The fixed-bed type drying refers to a method in which a material to be dried is fixed on a floor such as a porous iron plate through which air can pass, and hot air passes through the material from bottom to top to dry. The moving-type drying refers to a method of drying a material to be dried while mechanically stirring it. At this time, the direction in which hot air passes through the material may be the same as or different from the circulation direction of the material. Alternatively, the material may be circulated inside the dryer, and dried by passing heat transfer fluids through a separate pipe outside the dryer.

In the case of the drying process using the fixed-bed type belt drying device, the super absorbent polymer was obtained in the form of a laminate, and there were problems in that porosity in the dried laminate significantly decreased due to the increase in cohesion of the hydrogel polymer, and as a result, the differential pressure of hot air increased, the content of undried material in the form of crumbs increased, and warping occurred on the outer part of the dried product. Accordingly, the present inventors have found that drying while controlling the initial void formation rate within the above-mentioned range can manufacture a super absorbent polymer with an appropriate moisture content without lowering the drying efficiency of the laminate or causing warping on the outer part even when using the fixed-bed type belt drying device.

The drying step of step 4 may be performed using hot air at 70 °C to 250 °C, and the polymer polymerized, neutralized, and micronized according to the present disclosure can achieve excellent drying efficiency even under relatively mild conditions. In addition, the above-described initial void formation rate can be satisfied within the above hot air range. Preferably, the temperature of the hot air may be 75 °C to 200 °C.

The drying step of step 4 may be performed for 20 to 90 minutes, and the polymer polymerized, neutralized, and micronized according to the present disclosure can achieve excellent drying efficiency even under relatively mild

conditions for a relatively short drying time. In addition, the above-described initial void formation rate can be satisfied within the above hot air range. Preferably, the drying may be performed for 25 to 60 minutes.

According to one embodiment of the present disclosure, the moisture content of the super absorbent polymer obtained after drying can satisfy 3 wt% to 10 wt%, and the amount of undried material generated in the form of crumbs is significantly reduced while simultaneously achieving a relatively high moisture content.

In the case of the super absorbent polymer dried using a conventional fixed-bed type belt drying device, the moisture content of the polymer after drying is generally about 1 to 2 wt%. However, the polymer polymerized, neutralized, and micronized according to the present disclosure is preferable because it can achieve excellent drying efficiency and relatively high moisture content even when drying is performed under relatively mild conditions for a relatively short drying time.

## Pulverization step

According to one embodiment of the present disclosure, a step of preparing super absorbent polymer particles by pulverizing the super absorbent polymer particles obtained by performing the step 4 may be performed.

Specifically, the pulverizing step may be performed to have a normal particle diameter, that is, a particle diameter of 150 μm to 850 μm by pulverizing the dried super absorbent polymer particles.

The pulverizing machine used for this purpose may be a vertical pulverizer, a turbo cutter, a turbo grinder, a rotary cutter mill, a cutter mill, a disc mill, a shred crusher, a crusher, a chopper or a disc cutter, but the present disclosure is not limited thereto.

Alternatively, a pin mill, a hammer mill, a screw mill, a roll mill, a disc mill, or a jog mill may be used as the pulverizing machine, but the present disclosure is not limited thereto.

Meanwhile, in the micronization step of the preparation method of the present disclosure, super absorbent polymer particles having a smaller particle size distribution than in the conventional chopping step can be provided, and when moving type drying is performed, the moisture content after drying is maintained relatively high at 10 wt% or more. Therefore, even if pulverization is performed under mild conditions with less force, a super absorbent polymer having a very high content of normal particles, which have a particle diameter of 150 μm to 850 μm, can be formed, thereby greatly reducing the generation of fine powder.

The super absorbent polymer particles prepared as described above may include 80 wt% or more, 85 wt% or more, 89 wt% or more, 90 wt% or more, 92 wt% or more, 93 wt% or more, 94 wt% or more, or 95 wt% or more of super absorbent polymer particles having a particle diameter of 150 μm to 850 μm, which are normal particles, based on the total weight. The particle diameter of these polymer particles may be measured according to EDANA (European Disposables and Nonwovens Association) WSP 220.3.

In addition, the super absorbent polymer particles may include about 20 wt% or less, about 18 wt% or less, about 15 wt% or less, about 13 wt% or less, about 12 wt% or less, about 111 wt% or less, about 10 wt% or less, about 9 wt% or less, about 8 wt% or less, or about 5 wt% or less of fine powder having a particle diameter of less than 150 μm based on the total weight. This is in contrast to the super absorbent polymer prepared according to a conventional preparation method, which has greater than about 20 wt% to about 30 wt% of fine powder.

## Classification step

According to one embodiment of the present disclosure, after pulverizing the super absorbent polymer particles, a step of classifying the pulverized super absorbent polymer particles according to particle size may be further included.

Preferably, particles having a particle diameter of 150 to about 850 μm are classified, and only the particles having such a particle diameter can be commercialized after a surface cross-linking reaction. More specifically, the classified super absorbent polymer particles have a particle diameter of 150 to 850 μm, may include 50 wt% or more of particles having a particle diameter of 300 to 600 μm, and less than 3 wt% of fine powder having a particle diameter of less than 150 μm.

## Surface cross-linking step

According to one embodiment of the present disclosure, after pulverizing and/or classifying the super absorbent polymer particles, a step of forming a surface cross-linked layer on at least a part of the surface of the super absorbent polymer particles in the presence of a surface cross-linking agent may be further included.

Through the above step, the cross-linked polymer contained in the super absorbent polymer particles may be further cross-linked by a surface cross-linking agent, thereby forming a surface cross-linked layer on at least a part of the surface of the super absorbent polymer particles.

As the surface cross-linking agent, any cross-linking agent that has been conventionally used in the preparation

of a super absorbent polymer may be used without any particular limitation. Examples of the surface cross-linking agent may include at least one polyol selected from the group consisting of ethylene glycol, propylene glycol, 1,3-propanediol, 1,4-butanediol, 1,6-hexanediol, 1,2-hexanediol, 1,3-hexanediol, 2-methyl-1,3-propanediol, 2,5-hexanediol, 2-methyl-1,3-pentanediol, 2-methyl-2,4-pentanediol, tripropylene glycol and glycerol; at least one carbonate-based compound selected from the group consisting of ethylene carbonate, propylene carbonate and glycerol carbonate; an epoxy compound such as ethylene glycol diglycidyl ether; an oxazoline compound such as oxazolidinone; a polyamine compound; an oxazoline compound; a mono-, di- or poly-oxazolidinone compound; a cyclic urea compound; and the like.

Specifically, one or more, two or more, or three or more of the surface cross-linking agents described above may be used as the surface cross-linking agent. For example, ethylene carbonate-propylene carbonate (ECPC), propylene glycol and/or glycerol carbonate may be used.

The surface cross-linking agent may be used in an amount of 0.001 to 5 parts by weight based on 100 parts by weight of the super absorbent polymer particles. For example, it may be used in an amount of 0.005 parts by weight or more, 0.01 parts by weight or more, or 0.05 parts by weight or more, and 5 parts by weight or less, 4 parts by weight or less, or 3 parts by weight or less. When adjusting the content range of the surface cross-linking agent within the above-described range, a super absorbent polymer exhibiting excellent various physical properties can be prepared.

In addition, the step of forming the surface cross-linked layer may be performed by adding an inorganic material in addition to the surface cross-linking agent. That is, in the presence of the surface cross-linking agent and the inorganic material, the step of forming a surface cross-linked layer by further cross-linking the surface of the super absorbent polymer particles may be performed.

As the inorganic material, at least one inorganic material selected from the group consisting of silica, clay, alumina, silica-alumina composite, titania, zinc oxide and aluminum sulfate may be used. The inorganic material may be used in a powdery form or in a liquid form, and in particular, alumina powder, silica-alumina powder, titania powder, or nanosilica solution may be used. In addition, the inorganic material may be used in an amount of about 0.001 to about 1 parts by weight based on 100 parts by weight of the super absorbent polymer particles.

In addition, the method of mixing the surface cross-linking agent with the super absorbent polymer is not particularly limited. For example, a method of adding the surface cross-linking agent and the super absorbent polymer composition in a reactor for mixing, a method of spraying the surface cross-linking agent onto the super absorbent polymer composition, or a method of mixing the super absorbent polymer composition and the surface cross-linking agent while continuously providing them to a continuously operating mixer may be used.

When mixing the surface cross-linking agent and the super absorbent polymer composition, water and methanol may be further mixed therewith. When water and methanol are added thereto, there is an advantage that the surface cross-linking agent may be evenly dispersed in the super absorbent polymer composition. At this time, amounts of water and methanol to be added may be properly controlled for the purposes of inducing a uniform dispersion of the surface cross-linking agent, preventing an agglomeration phenomenon of the super absorbent polymer composition, and optimizing a surface penetration depth of the cross-linking agent.

The surface cross-linking process may be performed at a temperature of about 80 °C to about 250 °C. More specifically, the surface cross-linking process may be performed at a temperature of about 100 °C to about 220 °C, or about 120 °C to about 200 °C for about 20 minutes to about 2 hours, or about 40 minutes to about 80 minutes. When the above-described surface cross-linking process conditions are satisfied, the surface of the super absorbent polymer particles is sufficiently cross-linked to increase absorbency under pressure.

The heating means for the surface cross-linking reaction is not particularly limited. It is possible to provide a thermal media thereto or provide a heat source directly thereto. At this time, usable thermal media may be a heated fluid such as steam, hot air, hot oil, and the like, but the present invention is not limited thereto. Furthermore, the temperature of the thermal media provided thereto may be properly selected in consideration of the means of the thermal media, heating speed, and target temperature of heating. Meanwhile, an electric heater or a gas heater may be used as the heat source provided directly, but the present disclosure is not limited thereto.

According to one embodiment of the present disclosure, after forming a surface cross-linked layer on at least a part of the surface of the super absorbent polymer particles, at least one step of a cooling step of cooling the super absorbent polymer particles on which the surface cross-linked layer is formed, a hydration step of adding water to the super absorbent polymer particles on which the surface cross-linked layer is formed, and a post-treatment step of adding an additive to the super absorbent polymer particles on which the surface cross-linked layer is formed may be further performed. At this time, the cooling step, hydration step, and post-treatment step may be performed sequentially or simultaneously.

The additive added in the post-treatment step may include permeability enhancers, anti-caking agents, fluidity enhancers, antioxidants, and the like, but the present disclosure is not limited thereto.

When optionally performing the cooling step, hydration step, and post-treatment step, the moisture content of the final super absorbent polymer can be improved and a high quality super absorbent polymer product can be manufactured.

The super absorbent polymer prepared by the above method has a significantly small content of undried material

in the form of crumbs during the drying process, and the occurrence of warping of the dried material is effectively controlled, thereby enabling excellent absorption properties.

Specifically, the super absorbent polymer prepared by the above method may have a fast absorption rate and a low content of fine powder while having a water retention capacity (CRC), which is a general absorption property, similar or superior to the super absorbent polymer prepared by a conventional method.

Hereinafter, the function and effect of the present invention will be described in more detail through specific examples. However, these examples are for illustrative purposes only, and the invention is not intended to be limited by these examples.

**<Examples>**

**Example 1**

(Polymerization)

In a 5L glass container equipped with a stirrer and a thermometer, 1494 g of acrylic acid, 4.5 g of pentaerythritol triallyl ether (PETTAE) as an internal cross-linking agent, and 3392 g of water were mixed while stirring. At this time, 1000 cc/min of nitrogen was added to the mixture for 1 hour while maintaining the reaction temperature at 5 °C. Then, 19.92 g of 35% hydrogen peroxide aqueous solution, 22.4 g of 1.6% ascorbic acid aqueous solution, and 44.8 g of 1% 2,2'-azobisamidinopropane dihydrochloride aqueous solution were added thereto as a polymerization initiator, at the same time as adding and mixing 22.4 g of 0.01% iron sulfate aqueous solution as a reducing agent. After the polymerization reaction started in the mixture and the temperature of the polymer reached 85 °C, the temperature was maintained at 90±2 °C for about 6 hours to prepare a polymer.

(Neutralization and micronization)

Glycerol monolaurate (GML) was dissolved in water at 60 °C or more, and added to 1000 g of the obtained polymer in the form of an aqueous solution in an amount of 0.01 g per 1000 g of the polymer as a surfactant. Thereafter, using a high-speed rotary blade cutter (F-150/ manufactured by Karl Schnell) installed in the cylindrical pulverizing machine, it was pushed into a perforated plate having a plurality of 10 mm holes at a rotational speed of 3,000 rpm. The collected pulverized gel was pushed twice through a perforated plate with 6 mm holes and once through a perforated plate with 4 mm holes at a rotational speed of 500 rpm using a screw-type extruder installed in the cylindrical pulverizing machine. At each stage of the screw-type extruder, 237.8 g of 50% NaOH aqueous solution, 60 g of fine powder, and 75.5 g of 10% $Na_2SO4$ aqueous solution were added per 1 kg of crumbs to neutralize some of the acidic groups.

(Drying)

736 g of the neutralized and micronized hydrogel polymer was dried in a dryer capable of changing wind direction up and down. Specifically, it was dried by flowing hot air at 200 °C from the bottom to the top for 2.5 minutes, flowing hot air at 100 °C from the bottom to the top for 7.5 minutes and from the top to the bottom for 15 minutes, and then flowing hot air at 75 °C from the top to the bottom for 3 minutes (28 minutes in total). For XRM measurement, dry chips at this stage were used for measurement. Herein, the initial void formation rate measured 16 minutes after being placed in the dryer (57% of the total drying time) was 1.34%/min.

(Pulverization and classification)

The dried product was pulverized with a pulverizing machine (GRAN-U-LIZERTM, MPE), and then classified using an ASTM standard mesh to obtain a super absorbent polymer containing base resin particles having a particle diameter of 150 to 850 μm.

**Example 2**

A super absorbent polymer containing base resin particles was prepared in the same manner as in Example 1, except that drying was performed by flowing hot air at 120 °C from the bottom to the top for 20 minutes and from the top to the bottom for 20 minutes (40 minutes in total).

Herein, the initial void formation rate measured 16 minutes after being placed in the dryer (40% of the total drying time) was 1.11%/min.

**Example 3**

A super absorbent polymer containing base resin particles was prepared in the same manner as in Example 1, except that pentaerythritol triallyl ether (PETTAE), an internal cross-linking agent, was used in an amount of 3.5 g instead of 4.5 g.

Herein, the initial void formation rate measured 16 minutes after being placed in the dryer (57% of the total drying time) was 1.13%/min.

**Example 4**

A super absorbent polymer containing base resin particles was prepared in the same manner as in Example 1, except that the neutralization and micronization processes were changed from passing twice through a perforated plate with 6 mm holes and once through a perforated plate with 4 mm holes to passing twice through a perforated plate with 6 mm holes and once through a perforated plate with 8 mm holes.

Herein, the initial void formation rate measured 16 minutes after being placed in the dryer (57% of the total drying time) was 1.01%/min.

**Comparative Example 1: Other Grade Foaming Process**

1) Polymerization

In a 3L glass container equipped with a stirrer and a thermometer, 430 g of acrylic acid, 1,100 ppm (based on acrylic acid) of sodium bicarbonate as a foaming agent, 6000 ppm (based on acrylic acid) of propylene glycol di(meth) acrylate as an internal cross-linking agent, 100 ppm (based on acrylic acid) of acylphosphine as a photopolymerization initiator, 2000 ppm (based on acrylic acid) of sodium persulfate as a thermal polymerization initiator, and 600 g of 30% NaOH aqueous solution were mixed at room temperature ($25\pm1$°C) to prepare a monomer composition with a total solid content of 40 wt% (degree of neutralization of acrylic acid: 70 mol%).

Afterwards, 400 ppm (based on acrylic acid) of sodium metabisulfite was added to the monomer composition as a reducing agent. In addition, polymerization was performed by light irradiation for 1 minute simultaneously with the supply of the monomer composition.

2) Gel pulverization and drying

The hydrogel polymer was coarsely pulverized with a chopper having a hole size of 10 mm, and dried with hot air at around 200 degrees for 28 minutes. Herein, the initial void formation rate measured 16 minutes after being placed in the dryer (57% of the total drying time) was 0.5%/min.

3) Pulverization and classification

The dried polymer in step 4 was pulverized with a pulverizing machine, and then classified using an ASTM standard mesh to obtain base resin particles having a particle diameter of 150 to 850 μm.

**Comparative Example 2: Other Grade Non-Foaming Process**

1) Polymerization

In a 3L glass container equipped with a stirrer and a thermometer, 450 g of acrylic acid, 0.036 g of IRGACURE 819 as an initiator, and 1.17 g of PEGDA as an internal cross-linking agent were added, stirred, and mixed with 554.9 g of 31.5% NaOH aqueous solution and 509.7 g of water to obtain a 70% neutralized monomer composition. Afterwards, the monomer composition was cooled to 40 degrees, mixed with 50.63 g of SPS solution with a concentration of 1.78%, and polymerized by light irradiation for 1 minute.

2) Gel pulverization and drying

Thereafter, the hydrogel polymer was coarsely pulverized with a chopper having a hole size of 10 mm, and dried with hot air at around 197 degrees for 28 minutes. Herein, the initial void formation rate measured 16 minutes after being placed in the dryer (57% of the total drying time) was 0.33%/min.

**Comparative Example 3: Other Grade Non-Foaming Process - Different Gel Pulverizing Conditions**

The procedure was the same as Comparative Example 2 except that the gel pulverization was conducted using 16 mm holes instead of 10 mm holes.

Herein, the initial void formation rate measured 16 minutes after being placed in the dryer (57% of the total drying time) was 0.56%/min.

**<Experimental Example 1 - Control of drying process>**

(1) Measurement of the degree of void formation

The degree of void formation was measured with XRM (manufacturer: ZEISS, model name: Xradia 620 Versa) using dry chips of the drying process in the manufacturing process of Examples and Comparative Examples as follows, and the void formation rate was calculated according to Equation 1. Then, the results are shown in Table 1.

(1) 3D reconstructed XRM cross-sectional 2D images were converted into binarized images using otsu's thresholding technique to distinguish background and sap particles.
(2) 3D rendering was performed by stacking binarized cross-sectional 2D images.
(3) The surface area [1] and volume of 3D rendered sap particles were measured.
(4) Surface area: It was calculated using the method disclosed in ref [1; Lehmann, Gaetan and David Legland. Efficient N-Dimensional surface estimation using Crofton formula and run-length encoding, The Insight Journal, 2012. https://insight-journal.org/browse/publication/852.].
(5) Volume: The number of voxels in the actual 3D binarized image was counted.
(6) Internal pore: It was measured using the algorithm for calculating closed pores considering connectivity of 3D images [ref 2; Soille, P., Morphological Image Analysis: Principles and Applications, Springer-Verlag, 1999, pp. 173-174.]

[Equation 1]

$$\text{Initial void formation rate (\%/min)} = (R_B2-R_B1)/(t1-t0)*100$$

in the above Equation, $R_B$ refers to a void volume ratio and is defined as a ratio of void volume ($V_B$) to total bulk volume (V),
t1 is the time at which drying begins,
t2 is the time at which 30 to 60% of total drying time has elapsed, and
$R_B1$ and $R_B2$ refer to $R_B$ values at t1 and t2, respectively.

(2) Measurement of drying efficiency

The dry plate-shaped laminate obtained in step 4 of Examples and Comparative Examples, which had undergone a drying process (before surface cross-linking), was cut into 10 x 10 cm to take samples. The sample was divided into three parts based on the cross-section (based on the height of the laminate) to obtain upper, middle, and lower layers, respectively. A sample was taken from the super absorbent polymer of each layer, and its initial weight $H_0$(g) and the weight $H_1$(g) after maintaining at 180 °C for 40 minutes through infrared heating were measured. Then, the moisture content was calculated according to Equation 2 below.

[Equation 2]

$$\text{Moisture content (wt\%)} = \{[H_0(g) - H_1(g)]/H_0(g)\} * 100$$

The above measurement was repeated 5 times, and the average value and standard deviation were obtained.

[Table 1]

| Category | Initial void formation rate (%) | Average moisture content (wt%) | Standard deviation of moisture content | Moisture content by stacking position (Upper/Middle/Lower layers) |
|---|---|---|---|---|
| Example 1 | 1.34 | 7.92 | 1.00 | 6.61/8.11/9.04 |
| Example 2 | 1.11 | 4.26 | 0.57 | 4.86/4.43/3.49 |
| Example 3 | 1.13 | 8.34 | 0.55 | 8.07/9.11/7.85 |
| Example 4 | 1.01 | 7.50 | 0.42 | 7.05/7.39/8.06 |
| Comparative Example 1 | 0.50 | 0.96 | 0.20 | 0.67/1.08/1.12 |
| Comparative Example 2 | 0.33 | 1.01 | 0.35 | 0.52/1.20/1.31 |
| Comparative Example 3 | 0.56 | 1.60 | 0.42 | 1.01/1.96/1.82 |

In the case of Examples 1 to 4 satisfying the initial void formation rate of the present disclosure, it was confirmed that the variation in moisture content by stacking position was small due to excellent drying efficiency while achieving a high moisture content. In the case of Comparative Examples in which the initial void formation rate is out of the present disclosure, the drying efficiency itself might be excellent, but the moisture content was only about 1 to 2 wt%, and physical properties of the final super absorbent polymer were significantly lower than those of Examples, as can be seen in Experimental Example 2 to be described later.

**<Experimental Example** 2 - **Evaluation of physical properties of super absorbent polymer>**

The physical properties of the super absorbent polymer containing the base resin (hereinafter referred to as BR) prepared in Examples and Comparative Examples were evaluated in the following manner and are listed in Table 2 below.

Unless otherwise indicated, all procedures were conducted in a constant temperature and humidity room (23±1 °C, relative humidity of 50±10%), and physiological saline or saline means a 0.9 wt% sodium chloride (NaCl) aqueous solution.

(1) Centrifuge Retention Capacity (CRC, , g/g)

The centrifuge retention capacity by absorption ratio under a non-loading condition of BR prepared in Examples and Comparative Examples was measured in accordance with EDANA (European Disposables and Nonwovens Association) WSP 241.3.

Specifically, after inserting $W_0$ (g, about 0.2 g) of BR prepared in one of Examples and Comparative Examples uniformly in a nonwoven fabric envelope and sealing the same, it was soaked in physiological saline (0.9 wt% sodium chloride aqueous solution) at room temperature. After 30 minutes, the envelope was centrifuged at 250G for 3 minutes to drain, and the mass $W_2$ (g) of the envelope was measured. Further, after carrying out the same operation without using the polymer, the mass $W_1$ (g) of the envelope was measured.

Then, CRC (g/g) was calculated using the obtained mass values according to the following Equation 3.

[Equation 3]

$$CRC\ (g/g) = \{[W_2(g) - W_1(g)]/W_0(g)\} - 1$$

(2) Vortex time

The vortex time was measured in seconds according to the method described in International Patent Publication No. 1987-003208.

Specifically, 2 g of BR was added to 50 mL of saline at 23 to 24 °C, and a magnetic bar (8 mm in diameter, 30 mm in length) was stirred at 600 rpm to measure the time taken until the vortex disappeared in seconds.

[Table 2]

| Category | CRC (g/g) | Vortex time (sec) |
|---|---|---|
| Example 1 | 46.1 | 26 |
| Example 2 | 45.8 | 27 |
| Example 3 | 50.2 | 26 |
| Example 4 | 45.7 | 25 |
| Comparative Example 1 | 38.3 | 56 |
| Comparative Example 2 | 51.5 | 82 |
| Comparative Example 3 | 50.2 | 90 |

As can be seen from the experimental data in Table 2, Examples of the present disclosure could achieve excellent absorption properties, especially significantly improved absorption rate with excellent drying efficiency by controlling the initial void formation rate to a specific range during the drying process.

In the case of Comparative Examples deviated from the initial void formation rate of the present disclosure, it was confirmed that the absorption rate was significantly reduced compared to Examples.

## Claims

1. A preparation method of a super absorbent polymer comprising the steps of:

   performing polymerization on a monomer composition containing a water-soluble ethylene-based unsaturated monomer having acidic groups, an internal cross-linking agent, and a polymerization initiator to form a polymer in which the water-soluble ethylene-based unsaturated monomer having acidic groups and the internal cross-linking agent are cross-link polymerized (step 1);
   neutralizing at least some of the acidic groups of the polymer (step 2);
   micronizing the polymer in the presence of a surfactant (step 3); and
   drying the neutralized and micronized polymer to prepare base resin particles (step 4),
   wherein an initial void formation rate of the polymer measured after 30 to 60% of total drying time is 0.8 to 1.7%/min in the step 4.

2. The preparation method of a super absorbent polymer of Claim 1,

   wherein the initial void formation rate is calculated by the following Equation 1:

   [Equation 1]

   $$\text{Initial void formation rate (\%/min)} = (R_B2-R_B1)/(t1-t0)*100$$

   in the above Equation, $R_B$ refers to a void volume ratio and is defined as a ratio of void volume ($V_B$) to total bulk volume (V),
   t1 is the time at which drying begins,
   t2 is the time at which 30 to 60% of total drying time has elapsed, and
   $R_B1$ and $R_B2$ refer to $R_B$ values at t1 and t2, respectively.

3. The preparation method of a super absorbent polymer of Claim 1,
   wherein the steps 2 and 3 are performed sequentially, alternately, or simultaneously.

4. The preparation method of a super absorbent polymer of Claim 1,
   wherein the micronization step of step 3 is performed using a micronization device comprising a perforated plate with a plurality of holes having a diameter of 1 mm to 20 mm.

5. The preparation method of a super absorbent polymer of Claim 1,

wherein the drying step of step 4 is performed using a fixed-bed type belt drying device.

**6.** The preparation method of a super absorbent polymer of Claim 1, wherein the drying step of step 4 is performed using hot air at 70 °C to 250 °C.

**7.** The preparation method of a super absorbent polymer of Claim 1,
wherein the drying step of step 4 is performed for 20 to 90 minutes.

**8.** The preparation method of a super absorbent polymer of Claim 1,
wherein the moisture content of the base resin particles obtained by performing the step 4 is 3 to 10 wt%.

**9.** The preparation method of a super absorbent polymer of Claim 1,
further comprising a step of pulverizing and classifying the base resin particles.

**10.** The preparation method of a super absorbent polymer of Claim 1 or Claim 9,
further comprising a step of forming a surface cross-linked layer on at least a part of a surface of the base resin particles.

【FIG. 1】

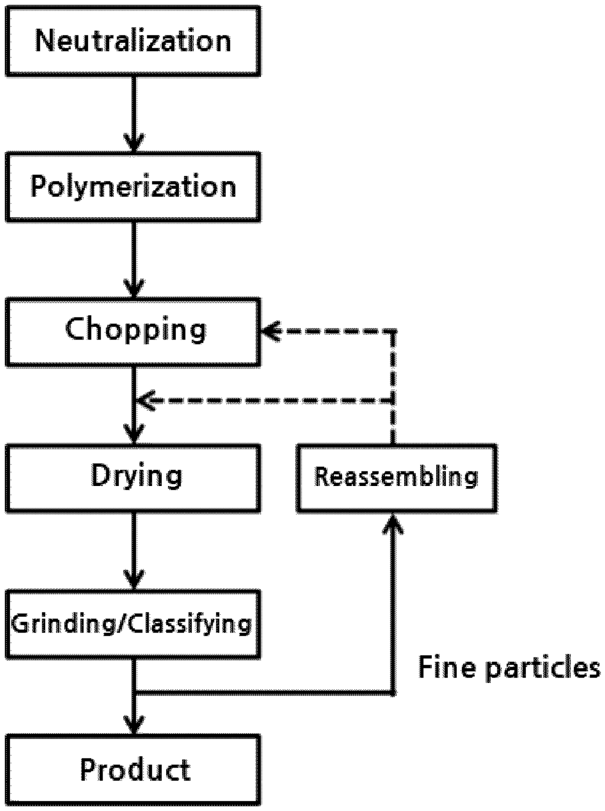
Neutralization
Polymerization
Chopping
Drying
Reassembling
Grinding/Classifying
Fine particles
Product

**INTERNATIONAL SEARCH REPO**

International application No.
**PCT/KR2023/010826**

**A. CLASSIFICATION OF SUBJECT MATTER**

**C08J 3/12**(2006.01)i; **C08J 3/24**(2006.01)i; **C08F 6/02**(2006.01)i

According to International Patent Classification (IPC) or to both national classification and IPC

**B. FIELDS SEARCHED**

Minimum documentation searched (classification system followed by classification symbols)

C08J 3/12(2006.01); A61L 15/24(2006.01); B01J 20/26(2006.01); B01J 20/28(2006.01); C08F 120/06(2006.01); C08F 2/01(2006.01); C08F 20/06(2006.01); C08F 8/44(2006.01); C08J 3/075(2006.01); C08J 3/24(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 공극(pore), 중화(neutralization), 미립화(micronization), 건조(drying), 고흡수성 수지(super absorbent polymer, SAP), 계면활성제(surfactant, surface active material)

**C. DOCUMENTS CONSIDERED TO BE RELEVANT**

| Category* | Citation of document, with indication, where appropriate, of the relevant passages | Relevant to claim No. |
|---|---|---|
| Y | CN 113754809 A (WANHUA CHEMICAL GROUP CO., LTD.) 07 December 2021 (2021-12-07)<br>See abstract; claims 3-5; paragraphs [0163]-[0167]; and example 1. | 1-10 |
| Y | KR 10-2019-0077541 A (NIPPON SHOKUBAI CO., LTD.) 03 July 2019 (2019-07-03)<br>See claims 1 and 2; and paragraphs [0401]-[0405]. | 1-10 |
| Y | US 2017-0065739 A1 (BASF SE) 09 March 2017 (2017-03-09)<br>See abstract; paragraphs [0054] and [0065]; and claims 1 and 7. | 4,5,8 |
| A | KR 10-2022-0088354 A (LG CHEM, LTD.) 27 June 2022 (2022-06-27)<br>See entire document. | 1-10 |
| A | US 9486777 B2 (BASF SE) 08 November 2016 (2016-11-08)<br>See entire document. | 1-10 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 November 2023** | **08 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPO

International application No.
**PCT/KR2023/010826**

**C. DOCUMENTS CONSIDERED TO BE RELEVANT**

| Category* | Citation of document, with indication, where appropriate, of the relevant passages | Relevant to claim No. |
|---|---|---|
| A | KR 10-2016-0149237 A (SONGWON INDUSTRIAL CO., LTD.) 27 December 2016 (2016-12-27)<br>See entire document. | 1-10 |
| A | WO 2020-008376 A1 (RELIANCE INDUSTRIES LIMITED) 09 January 2020 (2020-01-09)<br>See entire document. | 1-10 |

Form PCT/ISA/210 (second sheet) (July 2022)

**INTERNATIONAL SEARCH REPORT**
**Information on patent family members**

International application No.
**PCT/KR2023/010826**

| Patent document cited in search report | Publication date (day/month/year) | Patent family member(s) | Publication date (day/month/year) |
|---|---|---|---|
| CN 113754809 A | 07 December 2021 | CN 113754809 B | 08 November 2022 |
| KR 10-2019-0077541 A | 03 July 2019 | CN 109996835 A | 09 July 2019 |
| | | EP 3543279 A4 | 19 August 2020 |
| | | JP 2019-052285 A | 04 April 2019 |
| | | KR 10-2019-0077540 A | 03 July 2019 |
| | | US 11465126 B2 | 11 October 2022 |
| | | WO 2018-092863 A1 | 24 May 2018 |
| | | WO 2018-092864 A1 | 24 May 2018 |
| US 2017-0065739 A1 | 09 March 2017 | CN 107075030 A | 18 August 2017 |
| | | CN 107075030 B | 04 August 2020 |
| | | EP 3140325 A1 | 15 March 2017 |
| | | EP 3140325 B1 | 11 July 2018 |
| | | JP 2017-517620 A | 29 June 2017 |
| | | JP 6646042 B2 | 14 February 2020 |
| | | US 10179185 B2 | 15 January 2019 |
| | | WO 2015-169912 A1 | 12 November 2015 |
| KR 10-2022-0088354 A | 27 June 2022 | CN 115989268 A | 18 April 2023 |
| | | EP 4186945 A1 | 31 May 2023 |
| | | JP 2023-540289 A | 22 September 2023 |
| | | WO 2022-131837 A1 | 23 June 2022 |
| US 9486777 B2 | 08 November 2016 | CN 104603159 A | 06 May 2015 |
| | | CN 104603159 B | 14 July 2017 |
| | | EP 2890722 A1 | 08 July 2015 |
| | | EP 2890722 B1 | 21 November 2018 |
| | | JP 2015-526577 A | 10 September 2015 |
| | | JP 6312680 B2 | 18 April 2018 |
| | | US 2014-0066584 A1 | 06 March 2014 |
| | | WO 2014-033083 A1 | 06 March 2014 |
| KR 10-2016-0149237 A | 27 December 2016 | CN 106232689 A | 14 December 2016 |
| | | CN 106232689 B | 23 August 2019 |
| | | EA 030945 B1 | 31 October 2018 |
| | | EA 201691522 A1 | 30 January 2017 |
| | | WO 2015-163512 A1 | 29 October 2015 |
| WO 2020-008376 A1 | 09 January 2020 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220181773
- WO 1987003208 A


### Non-patent literature cited in the description


- **ODIAN**. Principle of Polymerization. Wiley, 1981, 203
- **LEHMANN, GAETAN** ; **DAVID LEGLAND.** Efficient N-Dimensional surface estimation using Crofton formula and run-length encoding. *The Insight Journal*, 2012, https://insight-journal.org/browse/publication/852
- **SOILLE, P.** Morphological Image Analysis: Principles and Applications. Springer-Verlag, 1999, 173-174